# FASCICULE DE BREVET EUROPEEN

(11) **EP 2 834 134 B1**
(45) Date de publication et mention de la délivrance du brevet: **07.03.2018**
(21) Numéro de dépôt: 13719984.0
(22) Date de dépôt: 04.04.2013
(51) Int. Cl.: B62D 21/15, B62D 25/08

(54) **CHÂSSIS DE VÉHICULE AUTOMOBILE OPTIMISÉ POUR L'ABSORPTION D'UN CHOC FRONTAL**
FÜR ABSORPTION EINES FRONTAUFPRALLS OPTIMIERTER CHASSIS EINES KRAFTFAHRZEUGS
CHASSIS OF A MOTOR VEHICLE OPTIMISED FOR ABSORBING A FRONTAL IMPACT

(30) Priorité: 05.04.2012 FR 1253159
(43) Date de publication de la demande: 11.02.2015
(73) Titulaire: Renault S.A.S., 92100 Boulogne-Billancourt (FR)
(72) Inventeur: CAILLARD, Jerome, F-91190 Gif Sur Yvette (FR); DELORD, Christian, F-93320 Pavillons Sous Bois (FR); GAUMONT, Herve, F-78140 Velizy (FR); HLUBINA, Thierry, F-92372 Chaville (FR)
(86) Numéro de dépôt international: PCT/FR2013/050745
(87) Numéro de publication internationale: WO 2013/150246

(56) Documents cités:
- EP-A1- 0 421 277
- EP-A1- 2 186 712
- JP-A- 2007 112 260
- US-A1- 2004 183 340
- US-A1- 2006 170 206

## Description

L'invention concerne la partie avant d'un châssis de véhicule automobile, et plus particulièrement l'absorption d'un choc frontal par le longeron avant.

Généralement, l'énergie reçue par un véhicule automobile lors d'un choc frontal est transmise vers l'arrière du véhicule à l'aide de logerons répartis sur la longueur du châssis, et notamment à l'aide de longerons avant.

Pour transmettre l'énergie à la partie arrière du châssis, les longerons avant sont couplés au reste du châssis, par exemple à des longerons centraux montés sous le plancher du véhicule et à des bavolets latéraux disposés sur la périphérie du châssis.

L'énergie issue du choc frontal est absorbée à différents niveaux du châssis. Le châssis est configuré pour préserver au mieux l'habitacle, c'est-à-dire de manière à ce qu'il ne subisse quasiment aucune déformation pour protéger les individus à l'intérieur. Pour cela l'énergie est absorbée par différents éléments du châssis, notamment par les longerons avant. Les longerons avant sont les premiers moyens d'absorption d'énergie. Ils absorbent l'énergie engendrée par le choc frontal généralement par une compression du longeron, voire une rotation de celui-ci.

Le brevet américain US 6 908 146 décrit des longerons avant d'un châssis de véhicule automobile comprenant une portion avant et une portion arrière soudées ensemble de manière à se recouvrir partiellement de manière à augmenter la rigidité de l'ensemble, les longerons avant s'étendant en partie sous un tablier séparant l'habitacle du moteur. Les documents US 2010/0117403, US 6 938 948 et US 7 097 235 décrivent des châssis connus comprenant une paire de longerons. Les statistiques techniques décrites ne présentent pas les caractéristiques de section de longeron, de routing et d'agencement permettant une bonne compressibilité et une bonne adaptation à l'absorption d'énergie dans un environnement compact.

Les documents JP 2007 112260 A et EP 421 277 A1 décrivent également un châssis de véhicule automobile comprenant un tablier séparant l'habitacle du véhicule d'une portion avant du châssis destinée à recevoir le moteur, et des moyens d'absorption d'un choc frontal comportant deux longerons montés sur au moins la portion avant du châssis et disposés de chaque côté du châssis. Dans ces document chaque longeron comprend une partie avant et une partie arrière assemblées de manière à se recouvrir au moins partiellement, les longerons étant disposés de sorte que la zone de recouvrement soit sous le plan du tablier, la partie arrière du longeron comprenant un matériau moins compressible que la partie avant du longeron. De tels châssis peuvent néanmoins encore être optimisés.

L'invention se propose de pallier ces inconvénients à l'aide d'un châssis comprenant des longerons avant configurés pour optimiser l'absorption et la transmission vers l'arrière du véhicule d'un choc frontal, et éviter une intrusion du compartiment moteur dans l'habitacle.

Selon un aspect de l'invention, il est proposé selon un mode de réalisation, un châssis d'un véhicule automobile comprenant un tablier séparant l'habitacle du véhicule d'une portion avant du châssis destinée à recevoir le moteur, et des moyens d'absorption d'un choc frontal comportant deux longerons montés sur au moins la portion avant du châssis et disposés de chaque côté du châssis, chaque longeron comprenant une partie avant et une partie arrière assemblées de manière à se recouvrir au moins partiellement.

Selon une caractéristique générale, les longerons sont disposés de sorte que la zone de recouvrement soit sous le plan du tablier, et la partie arrière du longeron comprend un matériau moins compressible que la partie avant du longeron.

En positionnant la zone de recouvrement des partie avant et arrière des longerons sous le plan du tablier, et en ayant la partie arrière des longerons dans un matériau plus résistant aux forces de compression que la partie avant, la zone d'absorption du longeron avant comprend la partie avant du longeron, tandis que la partie arrière transmet le reliquat d'énergie vers l'arrière du châssis, tout en conservant l'habitacle sauf.

De préférence, la partie avant de chaque longeron comprend un coude avant séparant une portion avant planaire et une portion arrière inclinée vers le bas, la portion avant ayant une section plus petite que la section de la portion arrière.

La section croissante de la partie avant des longerons dans un sens allant de l'avant vers l'arrière, permet d'augmenter la quantité absorbée d'énergie due à un choc frontal, et permet d'optimiser la compression de la portion planaire.

La partie arrière d'un longeron comprend préférentiellement un coude arrière séparant une portion arrière planaire et une portion avant inclinée vers le haut avec un angle d'absorption par rapport à la portion arrière de la partie arrière du longeron, l'angle d'absorption étant strictement inférieur à 30° (le plus faible étant le mieux).

En conservant un faible angle d'absorption, le porte-à-faux, et par conséquent l'effort sur le longeron, sont réduits.

Avantageusement, le coude avant peut comprendre une amorce de rotation permettant une absorption d'énergie par rotation vers l'intérieur du longeron. L'amorce de rotation est réalisée dans le coude avant de la partie avant du longeron au niveau de la rehausse coupelle.

De préférence, la zone de recouvrement s'étend sur une zone de 50 mm entre la partie avant et la partie arrière du longeron.

Avantageusement, le châssis peut comprendre une traverse de tablier disposée à l'aplomb de la zone de recouvrement, orthogonalement aux longerons avant. Cette traverse permet un transfert d'effort vers le tunnel, elle permet de maintenir la partie arrière de longeron en rotation selon l'axe vertical « z ».

Le châssis peut également comprendre un renfort dans la zone de coude avant de la partie avant de longeron. Ce renfort permet d'éviter une ruine prématurée du longeron dans la zone du coude (zone dans laquelle se concentrent les contraintes).

D'autres avantages et caractéristiques de l'invention apparaîtront à l'examen de la description détaillée d'un mode de réalisation, nullement limitatif, et des dessins annexés, sur lesquels :
- la figure 1 illustre schématiquement une vue de dessus d'un châssis de véhicule automobile selon un mode de réalisation ;
- la figure 2 présente une vue de côté d'un longeron avant du châssis de la figure 1.

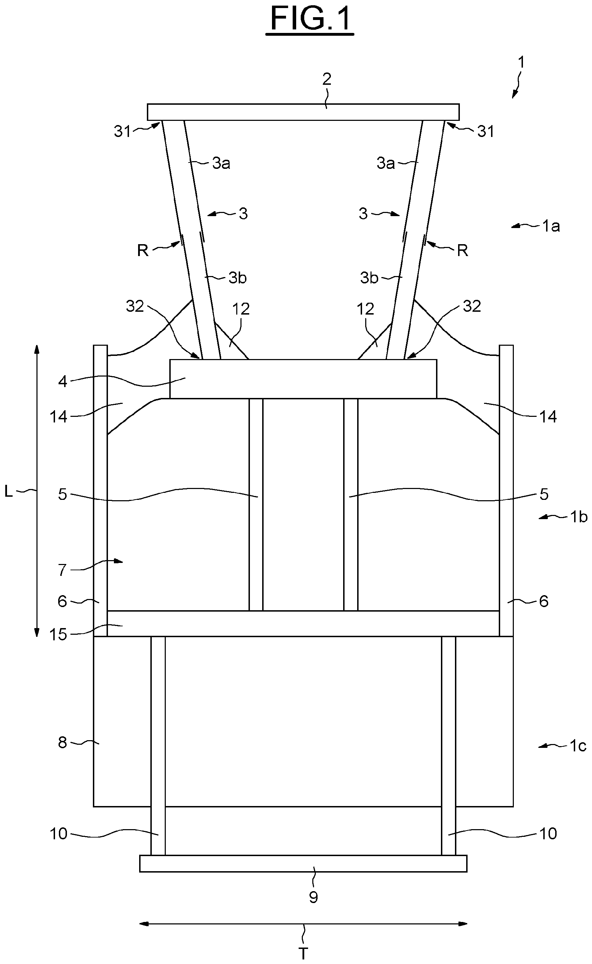

Sur la figure 1 est représentée de manière schématique une vue de dessus d'un châssis 1 de véhicule automobile selon un mode de réalisation de l'invention.

Le châssis 1 comprend une portion avant 1a comportant entre autre un pare-choc avant 2, des longerons 3 et une traverse avant 4, une portion centrale 1b comportant entre autre des longerons centraux 5, des bavolets 6 latéraux et un plancher central 7, et une portion arrière 1c comportant notamment un plancher de coffre 8 et un pare-choc arrière 9 couplés à des longerons arrière 10.

Dans la portion avant 1a du châssis 1, le pare-choc avant 2 s'étend dans une direction transverse T, c'est-à-dire orthogonale à la direction avant/arrière du châssis 1, et est assemblé avec deux longerons 3 s'étendant dans une direction longitudinale L, parallèle à la direction avant/arrière du châssis 1.

Chaque longeron 3 comprend une première extrémité 31 à laquelle est fixé le pare-choc 2 et une seconde extrémité 32 à laquelle est fixée la traverse avant 4 s'étendant dans la direction transverse T parallèlement au pare-choc 2. Les longerons 3 participent à la rigidité du châssis 1 et fournissent un support à des éléments moteurs et à des éléments de carrosserie du véhicule automobile. Ils sont également conçus pour participer à l'absorption d'énergie lors d'un choc frontal notamment. Ils permettent une transmission des efforts subis par le pare-choc avant 2 lors d'un choc frontal vers la portion arrière 1c du châssis 1 tout en absorbant une partie de l'énergie liées aux efforts.

Les longerons 3 sont réalisés en une partie avant 3a fixée au pare-choc avant 2 et une partie arrière 3b fixée à la traverse avant 4. La partie avant 3a et la partie arrière 3b sont assemblées ensemble de manière à se recouvrir partiellement sur une zone de recouvrement R.

La portion avant 1a du châssis 1 comprend également deux équerres 12 montées entre un longeron 3 et la traverse 4 de manière à rigidifier la structure du châssis 1. Chaque équerre 12 est assemblée avec un longeron 3 et la traverse avant 4 à l'aide de languettes de fixation venant en appui sous la traverse avant 4 et sous le longeron 3. Les équerres 12 sont également fixées par des points de soudure sur le longeron 3 et sur la traverse avant 4.

Le châssis 1 comprend également deux traverses latérales 14 s'étendant chacune entre un longeron 3 et un bavolet 6 latéral s'étendant dans la direction longitudinale L en périphérie du châssis 1 entre la portion avant 1a et la portion centrale 1b. Chaque traverse latérale 14 est fixée à un longeron 3 à hauteur de la seconde extrémité 32 par des points de soudure.

Les traverses latérales 14 s'étendent entre le longeron 3 et le bavolet 6 latéral selon une direction oblique de sorte que la portion de la traverse latérale 14 couplée au bavolet 6 latéral est en arrière par rapport à la portion de la traverse latérale couplée au longeron 3. L'angle ainsi formé entre le longeron 3 et la traverse latérale est un angle obtus.

La portion avant 1a du châssis 1 comprend ainsi des moyens d'absorption d'un choc frontal comprenant un pare-choc avant 2, des longerons 3 couplés, d'une part, à une traverse 4 avec des équerres 12, et couplés, d'autre part, à des traverses latérales 14 couplées à des bavolets 6 latéraux.

L'énergie due à un choc frontal sur le pare-choc avant 2 est ainsi transmise à la portion arrière 1c du châssis 1, d'une part, via les longerons centraux 5 couplés à la traverse avant 4 et à une traverse arrière 15, et passant sous le plancher central 7, et d'autre part, via les bavolets 6 latéraux s'étendant de chaque côté du châssis 1.

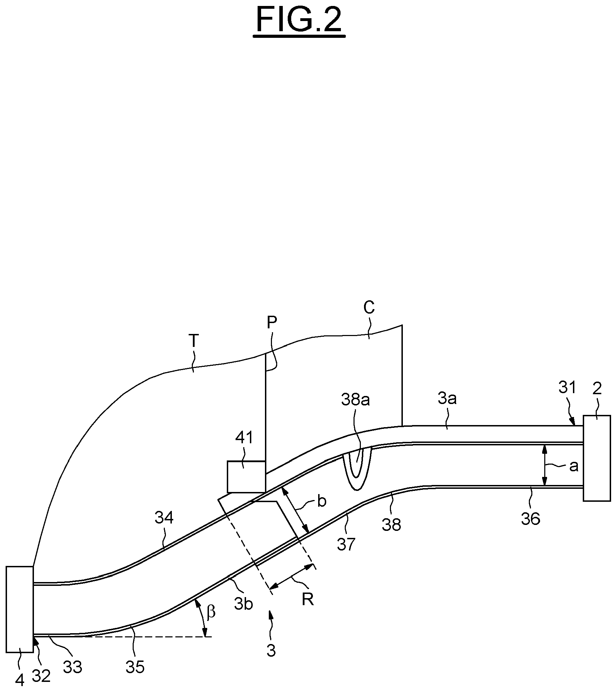

Sur la figure 2 est illustrée une vue détaillée de côté d'un longeron 3 de la partie avant 1a du châssis 1 de la figure 1.

La partie arrière 3b du longeron 3 comprend une portion arrière planaire 33 fixée à la traverse avant 4 via l'extrémité 32 et une portion avant 34 inclinée vers le haut d'un angle d'absorption β par rapport à la portion arrière 33 planaire. La portion arrière 33 planaire et la portion avant inclinée 34 sont séparées par un coude arrière 35.

La partie avant 3a du longeron 3 comprend une portion avant 36 planaire couplée au pare-choc avant 2, et une portion arrière 37 inclinée vers le bas. La portion avant 36 planaire et la portion arrière 37 inclinée sont séparées par un coude arrière 38.

L'angle d'absorption β est strictement inférieur à 30° (le plus faible est le mieux). L'angle d'absorption β est maintenu faible de manière à obtenir une trajectoire du longeron 3 plus lisse et de manière à augmenter la quantité d'énergie absorbée par compression. En effet, avec un angle d'absorption plus important, la compression du longeron 3 est principalement localisée sur les coudes avant et arrière 35 et 38, ce qui permet d'absorber moins d'énergie qu'avec une trajectoire de longeron plus lisse et qui permet de mieux répartir la compression du longeron, et notamment de la partie avant 3a, sur toute sa longueur.

La portion avant 36 planaire de la partie avant 3a possède une section ayant des dimensions « a » plus petites que les dimensions « b » de la section de la portion arrière 37 inclinée de la partie avant 3a. Ce gradient de section vers l'arrière de la partie avant 3a du longeron 3 permet d'augmenter la quantité d'énergie absorbée lors d'un choc frontal.

Par ailleurs, le coude avant 38 comprend une amorce de rotation (non représentée) permettant d'absorber une partie de l'énergie transmise par les longerons 3 par rotation vers l'intérieur du longeron 3, et notamment par rotation vers l'intérieur de la partie avant 3a. L'amorce de rotation facilite la compression par rotation du longeron 3. Elle est disposée dans le masque de rehausse coupelle C.

La zone de recouvrement R est située sous le plan P du tablier T, et sous une traverse 41 de tablier sur laquelle repose le tablier T. La partie arrière 3b est réalisée dans un matériau peu compressible alors que la partie avant 3a est réalisée dans un matériau compressible. Ainsi, la zone de recouvrement R est disposée au niveau de la zone limite d'intrusion dans l'habitable. Le longeron 3 est configuré pour se compresser longitudinalement et par rotation sur une partie devant le plan P de tablier T.

La portion avant 36 planaire de la partie avant 3a de longeron 3 comporte également un renfort de choc (non représentée) permettant d'augmenter la quantité d'énergie absorbée par la portion avant 36. Le renfort de choc peut, par exemple, être plaqué sur le fond ou sur le flan du longeron, ce renfort peut également prendre la fonction de support berceau.

L'invention permet ainsi d'obtenir un châssis comprenant des longerons avant configurés pour optimiser l'absorption et la transmission vers l'arrière du véhicule d'un choc frontal, et éviter une intrusion du compartiment moteur dans l'habitacle.

## Revendications

1. Châssis (1) de véhicule automobile comprenant un tablier séparant l'habitacle du véhicule d'une portion avant (1a) du châssis destinée à recevoir le moteur, et des moyens d'absorption d'un choc frontal comportant deux longerons (3) montés sur au moins la portion avant (1a) du châssis (1) et disposés de chaque côté du châssis (1), chaque longeron (3) comprenant une partie avant (3a) et une partie arrière (3b) assemblées de manière à se recouvrir au moins partiellement, les longerons (3) étant disposés de sorte que la zone de recouvrement (R) soit sous le plan du tablier, la partie arrière (3b) du longeron comprenant un matériau moins compressible que la partie avant (3a) du longeron, **caractérisé en ce que** la partie arrière (3b) d'un longeron (3) comprend un coude arrière (35) séparant une portion arrière (33) planaire et une portion avant (34) inclinée vers le haut avec un angle d'absorption (β) par rapport à la portion arrière (33) de la partie arrière (3b) du longeron (3), l'angle d'absorption (β) étant strictement inférieure à 30°.

2. Châssis (1) selon la revendication 1, dans lequel la partie avant (3a) d'un longeron (3) comprend un coude avant (38) séparant une portion avant (36) planaire et une portion arrière (37) inclinée vers le bas, la portion avant (36) ayant une section plus petite que la section de la portion arrière (37).

3. Châssis (1) selon la revendication 1 ou 2, dans lequel le coude avant (38) comprend une amorce de rotation permettant une absorption d'énergie par rotation vers l'intérieur du longeron (3).

4. Châssis (1) selon l'une des revendications 1 à 3, dans lequel la zone de recouvrement (R) s'étend sur une zone de 50 mm entre la partie avant (3a) et la partie arrière (3b) du longeron (3).

5. Châssis (1) selon l'une des revendications 1 à 4, comprenant une traverse (41) de tablier (T) disposée à l'aplomb de la zone de recouvrement (R).

6. Châssis (1) selon l'une des revendications 1 à 5, comprenant un renfort dans la zone de coude avant (38) de la partie avant (3a) de longeron (3).

## Patentansprüche

1. Fahrgestell (1) eines Kraftfahrzeugs, das eine Schutzwand, die den Innenraum des Fahrzeugs von einem vorderen Abschnitt (1a) des Fahrgestells trennt, der dazu bestimmt ist, den Motor aufzunehmen, und Einrichtungen zur Absorption eines Frontalaufpralls enthält, die zwei Längsträger (3) aufweisen, die auf mindestens den vorderen Abschnitt (1a) des Fahrgestells (1) montiert und an jeder Seite des Fahrgestells (1) angeordnet sind, wobei jeder Längsträger (3) einen vorderen Bereich (3a) und einen hinteren Bereich (3b) enthält, die so zusammengebaut sind, dass sie sich zumindest teilweise überdecken, wobei die Längsträger (3) so angeordnet sind, dass die Überdeckungszone (R) sich unter der Ebene der Schutzwand befindet, wobei der hintere Bereich (3b) des Längsträgers ein weniger komprimierbares Material als der vordere Bereich (3a) des Längsträgers enthält, **dadurch gekennzeichnet, dass** der hintere Bereich (3b) eines Längsträgers (3) ein hinteres Kniestück (35) enthält, das einen ebenen hinteren Abschnitt (33) und einen nach oben geneigten vorderen Abschnitt (34) mit einem Absorptionswinkel (β) bezüglich des hinteren Abschnitts (33) des hinteren Bereichs (3b) des Längsträgers (3) trennt, wobei der Absorptionswinkel (β) strikt kleiner als 30° ist.

2. Fahrgestell (1) nach Anspruch 1, wobei der vordere Bereich (3a) eines Längsträgers (3) ein vorderes Kniestück (38) enthält, das einen ebenen vorderen Abschnitt (36) und einen nach unten geneigten hinteren Abschnitt (37) trennt, wobei der vordere Abschnitt (36) einen kleineren Querschnitt hat als der hintere Abschnitt (37).

3. Fahrgestell (1) nach Anspruch 1 oder 2, wobei das vordere Kniestück (38) einen Drehungsauslöser enthält, der eine Energieabsorption durch Drehung des Längsträgers (3) nach innen ermöglicht.

4. Fahrgestell (1) nach einem der Ansprüche 1 bis 3, wobei die Überdeckungszone (R) sich über eine Zone von 50 mm zwischen dem vorderen Bereich (3a) und dem hinteren Bereich (3b) des Längsträgers (3) erstreckt.

5. Fahrgestell (1) nach einem der Ansprüche 1 bis 4, das einen Querträger (41) der Schutzwand (T) enthält, der senkrecht zur Überdeckungszone (R) angeordnet ist.

6. Fahrgestell (1) nach einem der Ansprüche 1 bis 5, das eine Verstärkung in der vorderen Kniestückzone (38) des vorderen Bereichs (3a) des Längsträgers (3) enthält.

## Claims

1. Motor vehicle chassis (1) comprising a firewall separating the passenger compartment of the vehicle from a front portion (1a) of the chassis intended to receive the engine, and means for absorbing a frontal impact including two side rails (3) mounted at least on the front portion (1a) of the chassis (1) and disposed on each side of the chassis (1), each side rail (3) comprising a front part (3a) and a rear part (3b) assembled so as to overlap at least partially, the side rails (3) being disposed so that the overlap area (R) is under the plane of the firewall, and the rear part (3b) of the side rail comprises a less compressible material than the front part (3a) of the side rail **characterized in that**, the rear part (3b) of a side rail (3) comprises a rear bend (35) separating a planar rear portion (33) and a front portion (34) inclined upwardly at an absorption angle (β) relative to the rear portion (33) of the rear part (3b) of the side rail (3), the absorption angle (β) being strictly less than 30°.

2. Chassis (1) according to Claim 1, wherein the front part (3a) of a side rail (3) comprises a front bend (38) separating a planar front portion (36) and a downwardly inclined rear portion (37), the front portion (36) having a section smaller than the section of the rear portion (37).

3. Chassis (1) according to Claim 1 or 2, wherein the front bend (38) comprises a rotation start point for absorbing energy by inward rotation of the side rail (3).

4. Chassis (1) according to any one of Claims 1 to 3, wherein the overlap area (R) extends over an area of 50 mm between the front part (3a) and the rear part (3b) of the side rail (3).

5. Chassis (1) according to any one of Claims 1 to 4, comprising a crossmember (41) of the firewall (T) disposed vertically in line with the overlap area (R).

6. Chassis (1) according to any one of Claims 1 to 5, comprising a reinforcement in the front bend area (38) of the front part (3a) of the side rail (3).
